# EUROPEAN PATENT APPLICATION

(11) **EP 2 394 852 A2**
(43) Date of publication of application: **14.12.2011**
(21) Application number: 11168032.8
(22) Date of filing: 30.05.2011
(51) Int. Cl.: B60Q 1/14

(54) **Vehicle headlamp system, controller, and vehicle headlamp**

(30) Priority: 10.06.2010 JP 2010133242
(71) Applicant: Koito Manufacturing Co., Ltd., Tokyo 108-8711 (JP)
(72) Inventor: Yamazaki, Masashi, Shizuoka-shi, Shizuoka (JP); Tomono, Toshikazu, Shizuoka-shi, Shizuoka (JP); Toda, Atsushi, Shizuoka-shi, Shizuoka (JP)
(74) Representative: Grünecker, Kinkeldey, Stockmair & Schwanhäusser

(57) **Abstract**

There is provided a lamp system (100) for a vehile. The lamp system (100) includes: a vehicle lamp (70) configured to selectively irradiate one of a plurality of high beam light distribution patterns (PHI, PH2, PH3,AH) toward a front area of the vehicle, wherein the front area is partitioned into a plurality of irradiation areas (A1, A2, A3) in a vehicle width direction; a controller (100) configured to control the vehicle lamp so as to select one of the plurality of high beam light distribution patterns (PH1, PH2, PH3,AH) in response to position information of an object (C) in front of the vehicle. When the controller selects one of the high beam ligh distribution patterns so as to increase an irradiation area of the selected high beam light distribution pattern, the vehicle lamp irradiates the selected high beam light distribution pattern toward the front area of the vehicle after a certain lighting delay time has elapsed.

## Description

### Technical Field

The present disclosure relates to a technique that controls the irradiation state of a lamp based on an image taken in front of a vehicle.

### Related Art

In the past, there has been known a vehicle headlight device (for example, see JP-A-2009-179113). The vehicle headlight device divides a light distribution pattern, which is formed by the light irradiation of a light source for high beam irradiation, into a plurality of areas, controls the light irradiation of the respective divided areas, and is controlled to additionally irradiate a low beam light distribution pattern. According to this device, the driver's visibility on a road can be improved even in the case of a low beam.

Further, there have been proposed systems that acquire image data about the area in front of a subject vehicle by an image acquisition unit such as a camera mounted in a subject vehicle and use the acquired image data to control the subject vehicle. Among the systems, there are systems that detect forward-positioned vehicles positioned in front of a subject vehicle as image data and automatically control headlights of a subject vehicle so as not to direct glare, which causes discomfort, at drivers or fellow passengers of detected oncoming vehicles or preceding vehicles (for example, see JP-A-2009-227088 and JP-A-2010-000957).

Meanwhile, when the control of the vehicle headlight is automatically performed, a light distribution pattern is frequently switched. For this reason, there is a concern that a driver feels uncomfortable.

### SUMMARY OF THE INVENTION

Embodiments described herein provide a technique that reduces driver discomfort caused by the frequent change of a light distribution pattern.

According to an aspect of the invention, there is provided a vehicle lamp system. The lamp system (100) includes: a vehicle lamp (70) configured to selectively irradiate one of a plurality of high beam light distribution patterns (PH1, PH2, PH3,AH) toward a front area of the vehicle, wherein the front area is partitioned into a plurality of irradiation areas (A1, A2, A3) in a vehicle width direction; a controller (100) configured to control the vehicle lamp so as to select one of the plurality of high beam light distribution patterns (PH1, PH2, PH3,AH) in response to position information of an object (C) in front of the vehicle. When the controller selects one of the high beam ligh distribution patterns so as to increase an irradiation area of the selected high beam light distribution pattern, the vehicle lamp irradiates the selected high beam light distribution pattern toward the front area of the vehicle after a certain lighting delay time has elapsed.

According to this aspect, since the controller irradiates the corresponding irradiation area after a predetermined lighting delay time passes, the frequent change of an irradiation area is suppressed without immediately following the change of the information that shows the circumstances in front of a subject vehicle. For this reason, the uncomfortable feeling of a driver is reduced.

According to an aspect of the invention, the plurality of high beam light distribution include: a complete high beam light distribution pattern (AH) which is irradiated to all of the irradiation areas (A1, A2, A3); and a partial high beam light distribution patterns (PH1,PH2, PH3) each of which is irradiated to a part of all of the irradiatation areas (A1, A2, A3) and each of which is formed by removing a part of the complete high beam light distribution pattern. If the object (C) is present in one of the irradiation areas (A1, A2, A3), the controller counts the lighting delay time, which corresponds to said one of the irradiation areas (A1, A2, A3), from zero again. The lighting delay times, which correspond to the irradiation areas of the partial high beam light distribution patterns, are set to equal to or larger than the lighting delay time that corresponds to the irradiation area of the complete high beam light distribution pattern.

Accordingly, even when the information shows that an object, which should not be irradiated, is present in the irradiation areas of the high beam light distribution pattern, afterward, the vehicle lamp system can directly form the complete high beam light distribution pattern without forming a partial high beam light distribution pattern from the previous light distribution pattern. For this reason, as compared to the case where the vehicle lamp system changes a light distribution pattern from the previous light distribution pattern to the partial high beam light distribution pattern and changes the light distribution pattern to the complete high beam light distribution pattern in a short time, the frequent change of a light distribution pattern is suppressed. As a result, driver discomfort is reduced.

According to an aspect of the invention, when the controller completely counts the lighting delay time corresponding to one of the irradiation areas of the partial high beam light distribution patterns while the object is not present in the other irradiation areas, the vehicle lamp defers the irradiation of the partial high beam light distribution pattern corresponding to the completely-counted lighting delay time. When the counter completely counts the lighting delay time corresponding to the irradiation area of the complete high beam light distribution pattern, the vehicle lamp starts the irradiation of the complete high beam light distribution pattern.

Accordingly, for example, if an object, which should not be irradiated, present in another irradiation area is out of the range of all the irradiation areas of the high beam light distribution pattern until the lighting delay time corresponding to any one of the irradiation areas of the partial high beam light distribution pattern is completely counted, the vehicle lamp system can directly form the complete high beam light distribution pattern without forming a partial high beam light distribution pattern from the previous light distribution pattern. For this reason, as compared to the case where the vehicle lamp system changes a light distribution pattern from the previous light distribution pattern to the partial high beam light distribution pattern of the irradiation area to which the completely counted lighting delay time corresponds and changes the light distribution pattern to the complete high beam light distribution pattern in a short time, the frequent change of a light distribution pattern is suppressed. As a result, driver discomfort is reduced.

According to an aspect of the invention, when the controller completely counts the lighting delay time corresponding to one of the irradiation areas of the partial high beam light distribution patterns, if the object is approaching said one of the irradiation areas, the vehicle lamp defers the irradiation of the partial high beam light distribution pattern corresponding to the completely-counted lighting delay time, and if the object is not approaching said one of the irradiation areas, the vehicle lamp starts the irradiation of the partial high beam light distribution pattern corresponding ot the completely-counted lighting delay time.

When an object, which should not be irradiated, is approaching the irradiation area to which the completely counted lighting delay time corresponds, a possibility that the object, which should not be irradiated, is included in the irradiation area is increased afterward. For this reason, even if the vehicle lamp system forms a partial high beam light distribution pattern of the irradiation area to which the completely counted lighting delay time corresponds, the vehicle lamp system switches a light distribution pattern to another light distribution pattern after a short time thereafter. Accordingly, when it is anticipated that the irradiation area to which the completely counted lighting delay time corresponds will not continue to be irradiated with the partial high beam light distribution pattern, the vehicle lamp system suspends the switching of the previous light distribution pattern to the partial high beam light distribution pattern that irradiates the irradiation area. Accordingly, the frequent change of a light distribution pattern is suppressed, so that driver discomfort is reduced.

According to an aspect of the invention, when the controller completely counts the lighting delay time corresponding to one of the irradiation areas of the high beam light distribution patterns, if the vehicle is traveling on a curved road, the vehicle lamp starts the irradiation of the high beam light distribution pattern corresponding to the completely-counted lighting delay time.

When a subject vehicle is traveling on a curved road, an object, which should not be irradiated, is often seen so as to have a lot of movement in front of the subject vehicle in a vehicle width direction as compared to a case where the subject vehicle is traveling on a straight road. For this reason, a partial high beam light distribution pattern, which irradiates a part of the irradiation areas of the high beam light distribution pattern, is apt to be switched in a short time. Accordingly, since the irradiation of the corresponding high beam light distribution pattern is suspended when a subject vehicle is traveling on a curved road, the frequent change of a light distribution pattern is suppressed. As a result, driver discomfort is reduced.

According to an aspect of the invention, when the controller completely counts the lighting delay time corresponding to one of the irradiation areas of the high beam light distribution patterns, if a speed of the vehicle is decelerated to a control area that is higher than a control lower limit speed of the vehicle lamp by a predetermined value, the controller defers the irradiation of the high beam light distribution pattern corresponding to the completely-counted lighting delay time, and if the speed of the vehicle is accelarted to an outside of the control area, the controller starts the irradiation of the high beam light distribution pattern corresponding to the completely-counted light delay time.

According to an aspect of the invention, there is provided a controller (100) that controls a vehicle lamp that selectively irradiates one of a plurality of high beam light distribution patterns (PH1, PH2, PH3,AH) toward a front area of the vehicle, wherein the front area is partitioned into a plurality of irradiation areas (A1, A2, A3) in a vehicle width direction. The controller (100) is configured to control the vehicle lamp so as to select one of the plurality of high beam light distribution patterns (PH1, PH2, PH3,AH) in response to position information of an object (C) in front of the vehicle. When the controller selects one of the high beam ligh distribution patterns so as to increase an irradiation area of the selected high beam light distribution pattern, the vehicle lamp irradiates the selected high beam light distribution pattern toward the front area of the vehicle after a certain lighting delay time has elapsed.

According to an aspect of the invention, there is provided a vehicle lamp (70) configured to selectively irradiate one of a plurality of high beam light distribution patterns (PH1, PH2, PH3, AH) toward a front area of the vehicle in response to position information of an object (C) in front of the vehicle, wherein the front area is partitioned into a plurality of irradiation areas (A1, A2, A3) in a vehicle width direction. When one of the plurality of high beam light distribution patterns (PH1, PH2, PH3,AH) are selected resulting in the increase in an irradiation area of the high beam light distribution pattern, the vehicle lamp irradiates the selected high beam light distribution pattern toward the front area of the vehicle after a certain lighting delay time has elapsed.

According to an aspect of the invention, there is provided a vehicle lamp system. The system includes: a vehicle lamp (70) configured to selectively irradiate one of a plurality of high beam light distribution patterns (PH1, PH2, PH3,AH) and a low beam light distribution pattern (Lo); and a controller (100) that controls the vehicle lamp. The vehicle lamp (70) turns on one of the high beam light distribution patterns after a certain lighting delay time has elaplsed, while the vehicle lamp (70) turns off one of the high beam light distribution patterns immediately.

According to this aspect, since a high beam light distribution pattern or a part thereof is turned on after a predetermined lighting delay time passes, the frequent change of an irradiation area is suppressed without immediately following the change of the information that shows the circumstances in front of a subject vehicle. For this reason, the uncomfortable feeling of a driver is reduced. Meanwhile, since a turned-on high beam light distribution pattern or a part thereof is immediately turned off when the turned-on high beam light distribution pattern or the part thereof should be turned off, glare being directed at an object, which should not be irradiated, such as a forward vehicle or a pedestrian present in front of a vehicle is avoided.

Other aspects and advantages of the present invention will be apparent from the following description, the drawings and the claims.

### BRIEF DESCRIPTION OF THE DRAWINGS

Fig. 1 is a conceptual diagram of a vehicle lamp system according to an embodiment;
Fig. 2 is a schematic cross-sectional view illustrating the internal structure of a headlight unit that is used in the vehicle lamp system according to this embodiment;
Fig. 3 is a schematic perspective view of a rotary shade;
Fig. 4 is a view showing the configuration of the vehicle lamp system according to this embodiment;
Figs. 5A to 5E are views showing light distribution patterns that can be formed by a headlight unit of this embodiment;
Figs. 6A to 6D are views continuously showing the change of a light distribution pattern when a light distribution pattern is immediately switched to an appropriate light distribution pattern without delay processing;
Fig. 7 is a schematic view showing that an image captured a capturing unit of this embodiment is divided into a plurality of areas;
Figs. 8A to 8D are views continuously showing the change of a light distribution pattern when a light distribution pattern is switched through the delay processing of this embodiment;
Fig. 9 is a view showing an example of a flowchart of light distribution control of this embodiment;
Figs. 10A to 10D are views continuously showing the change of a light distribution pattern when a lighting delay time t₁ (t₂, t₃) is set to be equal to or longer than a lighting delay time t.
Fig. 11 is a view showing a modification of the flowchart of light distribution control shown in Fig. 9;
Fig. 12 is a view showing a modification of the flowchart of light distribution control shown in Fig. 11;
Fig. 13 is a view showing a modification of the flowchart of light distribution control shown in Fig. 12;
Fig. 14 is a view showing a modification of the flowchart of light distribution control shown in Fig. 12; and
Figs. 15A to 15C are views continuously showing the change of a light distribution pattern in an example of automatic light distribution control.

### DETAILED DESCRIPTION

Exemplary embodiments of the invention will be described in detail below with reference to the drawings. Meanwhile, the same elements are denoted by the same reference numerals in the description of the drawings, and the repeated description thereof will be appropriately omitted.

### (VEHICLE LAMP SYSTEM)

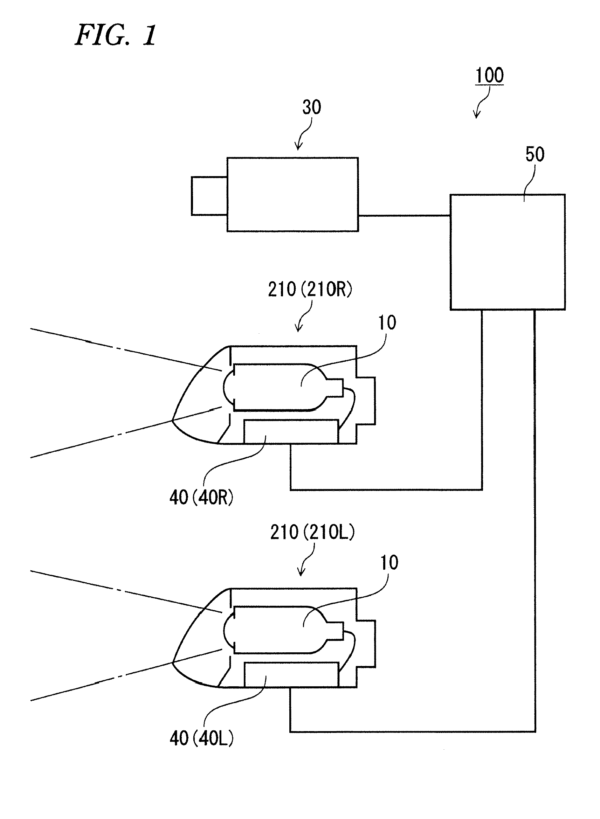

Fig. 1 is a conceptual diagram of a vehicle lamp system 100 according to this embodiment. The vehicle lamp system 100 mainly includes a capturing unit 30 and headlight units 210. The headlight units 210 are formed of a left headlight unit 210L and a right headlight unit 210R that are disposed at end portions of a vehicle in a vehicle width direction, respectively. Each of the headlight units 210L and 210R of this embodiment is a so-called adaptive front-lighting system that forms a low beam light distribution pattern or a partial high beam light distribution pattern by blocking a part of a beam emitted from, for example, one light source and forms a complete high beam light distribution pattern when not blocking the beam.

A lamp unit 10, which is included in each of the headlight units 210L and 210R, forms a plurality of light distribution patterns having optical axes that are directed to the area in front of a vehicle and orthogonal to the vehicle width direction. Each of the headlight units 210L and 210R is adapted to be capable of forming low and high beam light distribution patterns that are used in a region where vehicles or pedestrians keep to the left according to a traffic regulation. Further, each of the headlight units 210L and 210R may be adapted to be capable of forming a low beam light distribution pattern for right-side travel, a side high beam light distribution pattern, and the like that are used in a region where vehicles or pedestrians keep to the right according to a traffic regulation. The low beam light distribution pattern for right-side travel is referred to as a so-called "Dover low beam", and the side high beam light distribution pattern is obtained by blocking light corresponding to a part of a high beam light distribution pattern.

The capturing unit 30 may be formed of, for example, a CCD camera that captures an image including circumstances on the outside of a vehicle illuminated by light of the lamp unit 10. It is preferable that the capturing unit 30 be fixed at a position where the capturing unit can look ahead of a vehicle, for example, be fixed to a bracket provided on the back side of a rear-view mirror, to the inside of a front glass, onto a dashboard, or the like. A capturing range of the capturing unit 30 includes at least a traveling lane along which a subject vehicle is traveling, an opposite lane, and a sidewalk in the area in front of the subject vehicle, and preferably includes irradiation areas of the high beam light distribution pattern. Further, if a plurality of lanes is present on one side, the capturing range includes a traveling lane and at least left and right lanes of the traveling lane and preferably includes irradiation areas of the high beam light distribution pattern. The angle of view of the capturing unit 30 may be, for example, ±20° on the left and right sides.

The data of the image captured the capturing unit 30 are provided to a controller 50. The controller 50 detects a forward vehicle, such as a preceding vehicle or an oncoming vehicle, and acquires information about a pedestrian positioned on the area in front of the subject vehicle by processing image data based on information that is provided from the capturing unit 30. It may be possible to detect a preceding vehicle or an oncoming vehicle and a pedestrian or the like by a well-known method such as image processing using, for example, pattern matching. Further, it may be possible to detect a preceding vehicle or an oncoming vehicle by detecting light spots of tail lamps or headlights. For example, two red light spots show tail lamps. If these red light spots can be checked, it is considered that a forward vehicle is present. Further, two white or yellow light spots show headlights. If these white or yellow light spots can be checked, it is considered that an oncoming vehicle is present. Meanwhile, the controller 50 may be included in the capturing unit 30.

The controller 50 provides the information, which is related to the detected circumstances on the outside of a subject vehicle, to lamp controllers 40L and 40R of the headlight units 210L and 210R. Further, the lamp controllers 40L and 40R control the formation of light distribution patterns that are suitable for the state of the detected circumstances on the outside of a subject vehicle.

### (HEADLIGHT UNIT)

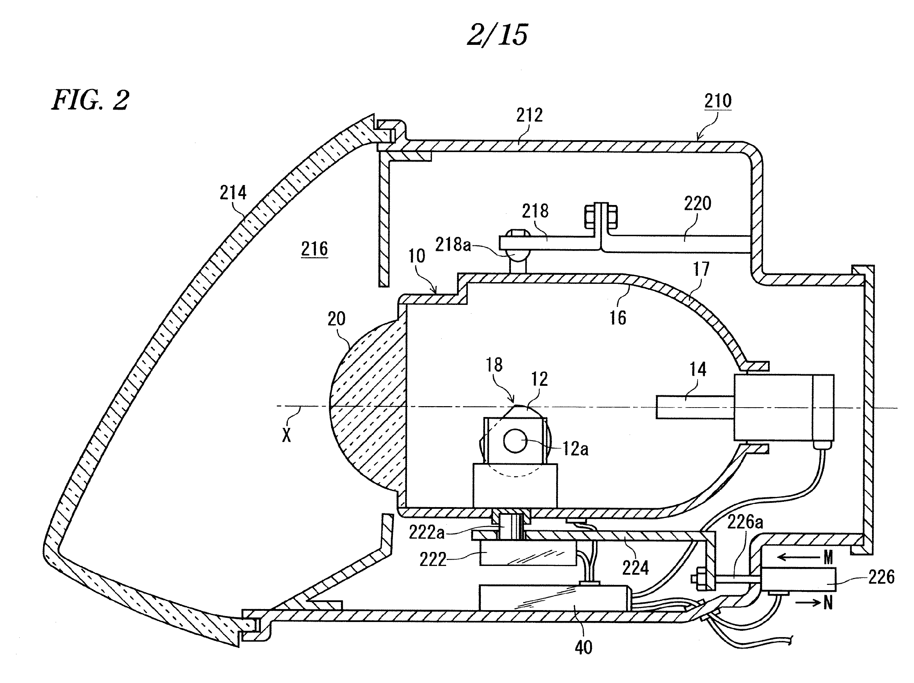

Fig. 2 is a schematic cross-sectional view illustrating the internal structure of the headlight unit 210 that is used in the vehicle lamp system 100 according to this embodiment. Fig. 2 shows a cross-section of the headlight unit 210 taken in a vertical plane, which includes an optical axis X of a lamp, as seen from the left side of the lamp. The headlight unit 210 is an adaptive front-lighting system that is disposed on each of the left and right portions of a vehicle in a vehicle width direction, and the structure of the headlight unit disposed on the right portion of the vehicle is substantially the same as that of the headlight unit disposed on the left portion of the vehicle. Accordingly, the headlight units disposed at the left and right portions of the vehicle will be described below without being particularly distinguished from each other.

The headlight unit 210 includes a lamp chamber 216. The lamp chamber 216 is formed by a lamp body 212 that includes an opening formed on the front side of the vehicle, and a transparent cover 214 that covers the opening of the lamp body 212. The lamp unit 10, which emits light to the area in front of the vehicle, is received in the lamp chamber 216. A lamp bracket 218, which includes a pivot mechanism 218a serving as a swiveling center of the lamp unit 10, is formed at a part of the lamp unit 10. The lamp bracket 218 is connected to a body bracket 220, which is erected on an inner wall surface of the lamp body 212, by fastening members such as screws. Accordingly, the lamp unit 10 is fixed at a predetermined position in the lamp chamber 216, and may swivel about the pivot mechanism 218a so that the posture of the lamp unit is changed to, for example, a forward inclined posture or a backward inclined posture.

Further, a rotating shaft 222a of a swivel actuator 222 of an adaptive front-lighting system (AFS) for a curved road, which irradiates the area in front in a traveling direction along which the subject vehicle is traveling while a vehicle is traveling on a curved road, is fixed to the lower surface of the lamp unit 10. The swivel actuator 222 makes the lamp unit 10 swivel about the pivot mechanism 218a in the traveling direction based on the steering angle data provided from the vehicle, the shape data of a traveling road provided from a navigation system, a relative positional relationship between a subject vehicle and a forward-positioned vehicle, and the like. As a result, the irradiation area of the lamp unit 10 faces not the area in front of the vehicle but the area in front on the curved road, so that the driver's forward field of view is improved. The swivel actuator 222 may be formed of, for example, a stepping motor. Meanwhile, if a swivel angle has a fixed value, a solenoid or the like may also be used as the swivel actuator.

The swivel actuator 222 is fixed to a unit bracket 224. A leveling actuator 226, which is disposed outside the lamp body 212, is connected to the unit bracket 224. The leveling actuator 226 is formed of, for example, a motor or the like that pushes and pulls a rod 226a in directions of arrows M and N. When the rod 226a is pushed in the direction indicated by the arrow M, the lamp unit 10 swivels about the pivot mechanism 218a so as to be in the backward inclined posture. In contrast, when the rod 226a is pulled in the direction indicated by the arrow N, the lamp unit 10 swivels about the pivot mechanism 218a so as to be in the forward inclined posture. When the lamp unit 10 is in the backward inclined posture, it may be possible to perform leveling adjustment that makes the optical axis be directed to the upper side. Further, when the lamp unit 10 is in the forward inclined posture, it may be possible to perform leveling adjustment that makes the optical axis be directed to the lower side. It may be possible to adjust the optical axis according to the posture of the vehicle by performing the above-mentioned leveling adjustment. As a result, it may be possible to adjust the range of light, which is emitted forward from the headlight unit 210, to an optimum distance.

A lamp controller 40, which controls the turning-on/off of the lamp unit 10 or controls the formation of a light distribution pattern, is disposed on the inner wall surface of the lamp chamber 216, for example, below the lamp unit 10. The lamp controller 40 also controls the swivel actuator 222, the leveling actuator 226, and the like.

The lamp unit 10 includes a shade mechanism 18 including a rotary shade 12, a bulb 14 as a light source, a lamp housing 17 that supports a reflector 16 on an inner wall thereof, and a projection lens 20. For example, an incandescent bulb, a halogen lamp, a discharge bulb, an LED, or the like may be used as the bulb 14. An example where the bulb 14 is formed of a halogen lamp is described in this embodiment. The reflector 16 reflects light that is emitted from the bulb 14. Further, a part of the light emitted from the bulb 14 and the light reflected by the reflector 16 are guided to the projection lens 20 through the rotary shade 12 of the shade mechanism 18.

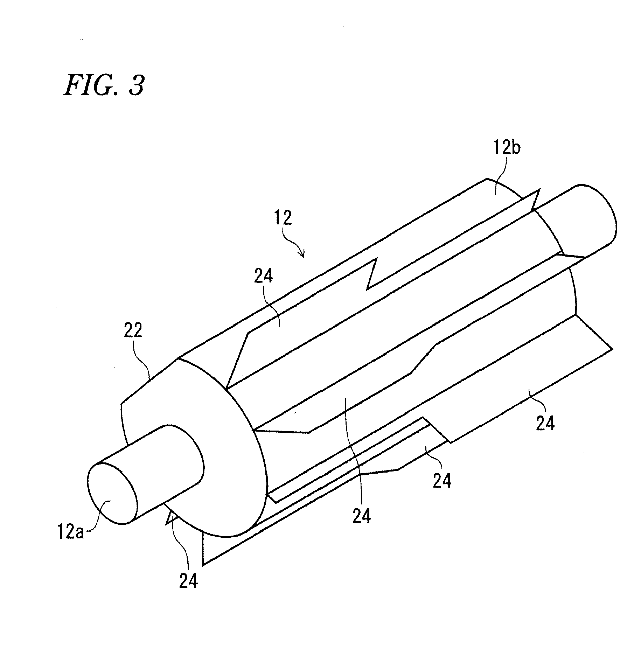

Fig. 3 is a schematic perspective view of the rotary shade 12. The rotary shade 12 is a cylindrical member that is rotated about a rotating shaft 12a by a shade rotating motor. Moreover, the rotary shade 12 includes a cutout portion 22 that is formed by cutting out a part of the rotary shade in an axial direction, and holds a plurality of plate-like shade plates 24 on an outer peripheral surface 12b thereof except for the cutout portion 22. The rotary shade 12 can move one of the cutout portion 22 and the shade plates 24 to a position on a rear focal plane, which includes the rear focus of the projection lens 20, according to the rotation angle thereof. Further, a light distribution pattern is formed so as to correspond to the shape of an edge portion of the shade plate 24, which is positioned on the optical axis X, according to the rotation angle of the rotary shade 12. For example, when one of shade plates 24 of the rotary shade 12 is moved onto the optical axis X and blocks a part of light emitted from the bulb 14, there is formed a low beam light distribution pattern or a light distribution pattern that partially has the characteristics of the low beam light distribution pattern. Further, when the cutout portion 22 is moved onto the optical axis X and the light emitted from the bulb 14 is not blocked, a high beam light distribution pattern is formed.

The rotary shade 12 of this embodiment is worked so as to be capable of forming a complete high beam light distribution pattern, which irradiates all the irradiation areas of a high beam light distribution pattern, and a partial high beam light distribution pattern, which blocks a part of a high beam light distribution pattern and irradiates the other part of the irradiation area, through the improvement of the shape of the shade blade 24.

The rotary shade 12 can be rotated by the driving of, for example, a motor. Accordingly, the rotary shade moves the shade plate 24 or the cutout portion 22, which forms a desired light distribution pattern, onto the optical axis X by the control of the rotation angle of the motor. Meanwhile, the cutout portion 22 formed on the outer peripheral surface 12b of the rotary shade 12 may be omitted so that the rotary shade 12 has only a function of blocking light. Further, in order to form a high beam light distribution pattern, the rotary shade 12 retreats from the position on the optical axis X by the driving of, for example, a solenoid or the like. Due to this structure, a low beam light distribution pattern or a light distribution pattern similar to the low beam light distribution pattern is fixed even though, for example, a motor rotating the rotary shade 12 fails. That is, it may be possible to realize a fail-safe function by reliably avoiding that the rotary shade 12 is fixed at a posture where a high beam light distribution pattern is formed.

The projection lens 20 is disposed on the optical axis X extending in the longitudinal direction of the vehicle, and the bulb 14 is disposed on the rear side of the rear focal plane of the projection lens 20. The projection lens 20 is a plano-convex aspheric lens of which the front surface is a convex surface and the rear surface is a flat surface. The projection lens projects a light source image, which is formed on the rear focal plane, onto a virtual vertical screen, which is formed on the front side of the lamp unit 10, as an inverted image.

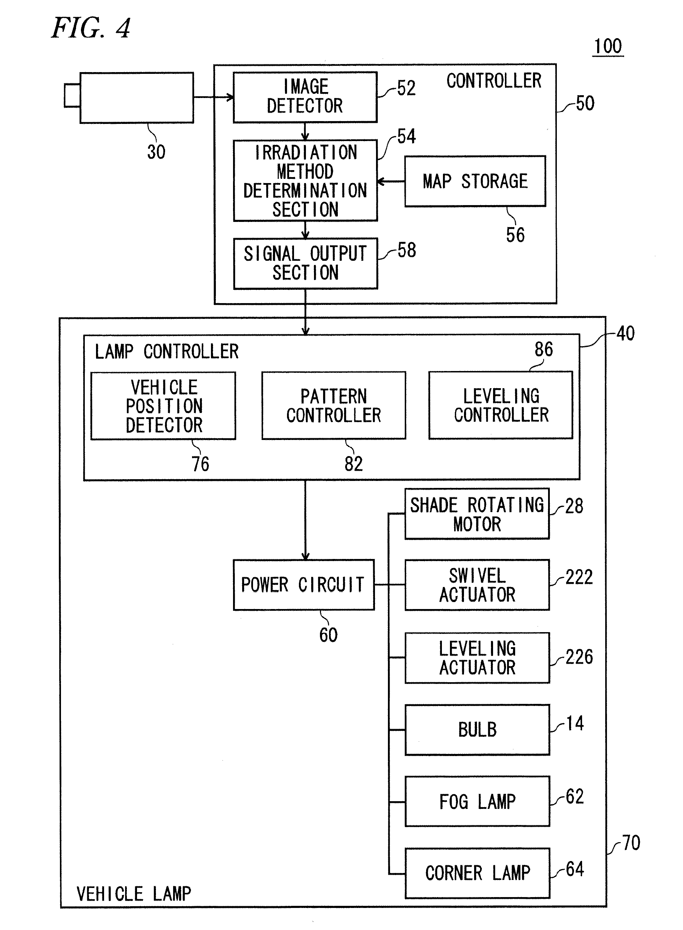

Fig. 4 is view showing the configuration of the vehicle lamp system 100 according to this embodiment. The vehicle lamp system 100 includes a vehicle lamp 70 that includes the headlight units 210 having the above-mentioned structure, a capturing unit 30 that is disposed in the vehicle so as to take an image in front of the vehicle, and a controller 50 that controls an irradiation control method of the vehicle lamp 70.

In Fig. 4, respective blocks of the controller 50 and the lamp controller 40 are realized by elements, such as a CPU, a memory, and the like of a computer in terms of hardware, and are realized by computer programs and the like loaded in a memory in terms of software. However, here, the respective blocks are shown as functional blocks that are achieved by the interaction among them. Accordingly, it is understood by those skilled in the art that these functional blocks can be realized in various forms by the combination of hardware and software.

The capturing unit 30 is provided at the front portion of the vehicle as means for recognizing an object in order to detect objects, such as forward vehicles, oncoming vehicles, or pedestrians. The capturing unit 30 may be a camera that is exclusively used for the control of the controller 50, and may be a camera that is common to other systems.

The controller 50 designates an appropriate irradiation control method to the vehicle lamp 70 based on an image captured the capturing unit 30. The controller 50 includes an image detector 52, an irradiation method determination section 54, a map storage 56, and a signal output section 58.

The image detector 52 receives image data of the image, which is taken in front of the vehicle, from the capturing unit 30, and obtains the average brightness and the number of light spots of the image based on the image data. The average brightness is obtained by averaging the brightness values of respective pixels of the image. Meanwhile, not the average brightness of the entire captured image but the average brightness of the area of a part of the image may be obtained. For example, the average brightness of the central area of the captured image, which is obtained by removing a peripheral portion having a predetermined length from the captured image, may be calculated. The number of light spots is obtained by counting the number of portions, which have a brightness value equal to or higher than a predetermined value, among the respective pixels of the image. Meanwhile, an arbitrary method may be used as a method of obtaining the average brightness or the number of light spots from the captured image.

The map storage 56 stores a control map where a corresponding irradiation control method is designated to each of areas formed on a two-dimensional map having two axes representing the brightness and the number of light spots. In this control map, an irradiation control method, which has a low possibility of directing glare at a forward vehicle, is designated to an area where brightness is higher than a predetermined value and the number of light spots is large and an irradiation control method, which switches light distribution according to the position of a forward vehicle, is designated to an area where brightness is lower than a predetermined value and the number of light spots is small.

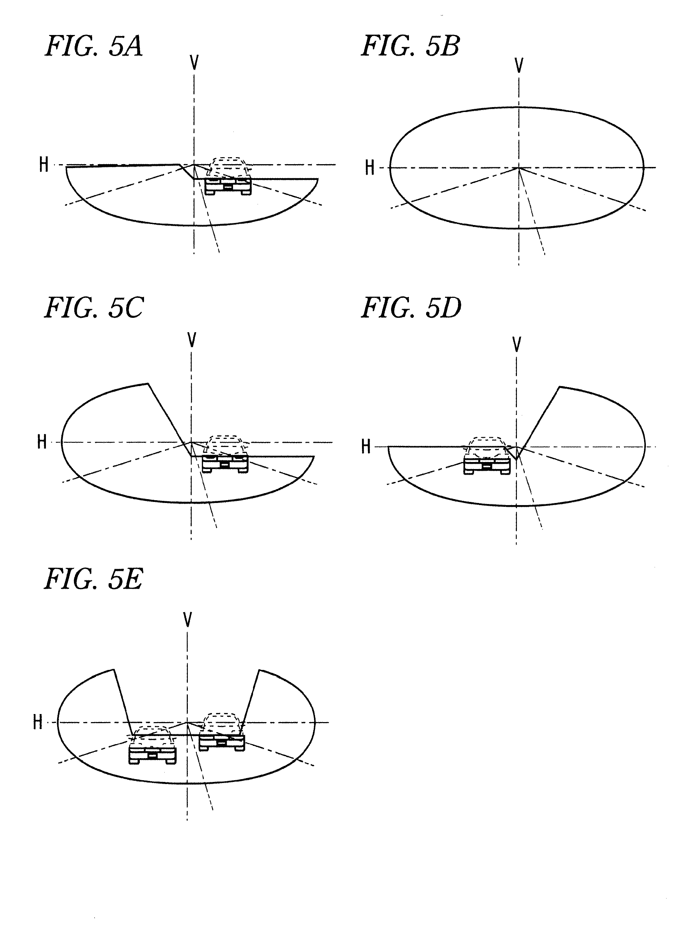

Meanwhile, specific examples of a light distribution pattern will be described below with reference to Fig. 5.

The irradiation method determination section 54 determines an irradiation control method for the vehicle lamp 70 by applying both the average brightness and the number of light spots, which are obtained by the image detector 52, to the control map stored in the map storage 56.

The signal output section 58 outputs a corresponding control signal to the lamp controller 40 of the vehicle lamp so that the irradiation control method determined by the irradiation method determination section 54 is performed.

The lamp controller 40 of the vehicle lamp 70 receives a signal from the controller 50, and controls the respective parts of the vehicle lamp 70 so that the determined irradiation control method is realized. The lamp controller 40 includes a vehicle position detector 76, a pattern controller 82, and a leveling controller 86. Further, the shade rotating motor 28, the swivel actuator 222, the leveling actuator 226, the bulb 14, a fog lamp 62, and a corner lamp 64 of the vehicle lamp are adapted to be controlled by the lamp controller 40 through a power circuit 60.

The vehicle position detector 76 receives the image data of the image, which is captured by the capturing unit 30, from the controller 50, and detects the position of a forward vehicle by searching for feature points, which represent a vehicle, from the image data.

The pattern controller 82 determines the light distribution patterns of the left and right headlight units 210 in order to irradiate the area in front of a subject vehicle with an optimum light distribution pattern according to the change of the position of a forward vehicle and the presence/non-presence of a forward vehicle detected by the vehicle position detector 76. Moreover, the shade rotating motor 28 and the swivel actuator 222 are controlled through the power circuit 60 so that the determined light distribution pattern is made.

For example, if a preceding vehicle or an oncoming vehicle is detected on the area in front of a subject vehicle, the pattern controller 82 determines that a low beam combined light distribution pattern should be formed so as to prevent glare. Further, the pattern controller 82 drives the shade rotating motors 28 of the left and right headlight units 210 by a predetermined amount, and forms a low beam combined light distribution pattern where a predetermined amount of light emitted from the bulb 14 is blocked by the rotary shade 12.

Furthermore, if a preceding vehicle or an oncoming vehicle is not detected on the area in front of a subject vehicle, the pattern controller 82 determines that a high beam combined light distribution pattern having a wide irradiation range should be formed so as to improve the driver's field of view. Moreover, the pattern controller 82 drives the shade rotating motors 28 of the left and right headlight units 210 by a predetermined amount, and forms a complete high beam light distribution pattern where light is not blocked by the rotary shade 12.

Further, if a preceding vehicle is not present and an oncoming vehicle is presnt in a region where vehicles and pedestrians keep to the left according to a traffic regulation, the pattern controller 82 determines that a first partial high beam light distribution pattern, which irradiates only a traveling lane with a high beam and does not irradiate a part of an opposite lane, should be formed. The first partial high beam light distribution pattern is one of special high beam light distribution patterns, and is a light distribution pattern where light corresponding to the right upper half of the complete high beam light distribution pattern is blocked.

Furthermore, if only a forward vehicle is presnt and an oncoming vehicle is not present in a region where vehicles and pedestrians keep to the left according to a traffic regulation, the pattern controller 82 determines that a second partial high beam light distribution pattern, which irradiates only an opposite lane with a high beam and does not irradiate a part of a traveling lane, should be formed. The second partial high beam light distribution pattern is one of special high beam light distribution patterns, and is a light distribution pattern where light corresponding to the left upper half of the complete high beam light distribution pattern is blocked.

Moreover, if a preceding vehicle such as a forward vehicle or an oncoming vehicle is presnt in the distance, the pattern controller 82 determines that a third partial high beam light distribution pattern, which does not irradiate a traveling lane and an opposite lane and irradiates both side areas of the lanes with a high beam, should be formed. The third partial high beam light distribution pattern is one of special high beam light distribution patterns, and is a light distribution pattern where light corresponding to the upper half of the complete high beam light distribution pattern is blocked.

Further, the pattern controller 82 drives the shade rotating motors 28 of the left and right headlight units 210 by a predetermined amount, and forms the respective partial high beam light distribution patterns.

Since the ADB (Adaptive Driving Beam) system itself according to a forward vehicle is well known, a more detailed description thereof will be omitted in this specification.

In addition, the pattern controller 82 may not perform the above-mentioned ADB but may form a light distribution pattern so that a high beam and a low beam are selectively used according to whether a forward vehicle is presnt. Since the AHB (Auto High Beam) system itself according to whether a forward vehicle is presnt is well known, a more detailed description thereof will be omitted in this specification.

The leveling controller 86 determines the leveling of the light distribution patterns of the left and right headlight units 210 in order to irradiate the area in front of a subject vehicle in an optimum direction of an optical axis according to the change of the position of the forward vehicle and the presence/non-presence of the forward vehicle detected by the vehicle position detector 76. Further, the leveling controller controls the leveling actuator 226 through the power circuit 60 so that an optical axis is directed to the determined direction of an optical axis.

When the lamp controller 40 receives a signal instructing an auxiliary lamp, such as a fog lamp or a corner lamp, to be turned on from the controller 50, the lamp controller 40 turns on the fog lamp 62 or the corner lamp 64 through the power circuit 60.

Figs. 5A to 5E are views showing light distribution patterns that can be formed by the headlight unit 210 of this embodiment. Figs. 5A to 5E show light distribution patterns formed on a virtual vertical screen that is disposed at a position 25 m ahead of the headlight unit 210. Five light distribution patterns shown in Figs. 5A to 5E can be formed in this embodiment. Meanwhile, each of the light distribution patterns shown in Figs. 5A to 5E is a composite light distribution pattern formed by superimposing light distribution patterns formed by the headlight units 210 that are disposed at the left and right portions of a vehicle in the vehicle width direction.

Fig. 5A shows a low beam light distribution pattern. The low beam light distribution pattern is a light distribution pattern that is considered so as not to direct glare at oncoming vehicles or pedestrians when a vehicle is traveling in an urban area or the like in a region where vehicles and pedestrians keep to the left according to a traffic regulation.

Fig. 5B shows a high beam light distribution pattern. The high beam light distribution pattern is a light distribution pattern that can secure the driver's forward field of view as much as possible.

Fig. 5C shows the above-mentioned first partial high beam light distribution pattern that is used in the region where vehicles and pedestrians keep to the left according to a traffic regulation. The first partial high beam light distribution pattern corresponds to the light distribution suitable when forward vehicles or pedestrians are not present on the traveling lane and oncoming vehicles or pedestrians are present on the opposite lane. The first partial high beam light distribution pattern is a light distribution pattern that is considered so as not to direct glare at oncoming vehicles or pedestrians on the opposite lane while improving driver's forward visibility.

Fig. 5D shows the above-mentioned second partial high beam light distribution pattern that is used in the region where vehicles and pedestrians keep to the left according to a traffic regulation. The second partial high beam light distribution pattern corresponds to the light distribution suitable when forward vehicles or pedestrians are present on the traveling lane and oncoming vehicles or pedestrians are not present on the opposite lane. The second partial high beam light distribution pattern is a light distribution pattern that is considered so as not to direct glare at forward vehicles or pedestrians on the traveling lane while improving driver's forward visibility.

Fig. 5E shows a third partial high beam light distribution pattern that is referred to as a "split light distribution pattern". The third partial high beam light distribution pattern is a pattern formed by modifying the first partial high beam light distribution pattern shown in Fig. 5C and the second partial high beam light distribution pattern shown in Fig. 5D. The split light distribution pattern is a light distribution pattern that can reliably secure the field of view outside the traveling lane and the opposite lane while suppressing the irradiation of the traveling lane and the opposite lane with light.

As described above, the vehicle lamp system 100 according to this embodiment includes the vehicle lamp 70 and the controller 50. The vehicle lamp 70 can form a plurality of kinds of high beam light distribution patterns which are divided into a plurality of irradiation areas in the vehicle width direction and of which the presence/non-presence of the irradiation of each irradiation area is switched. The controller 50 controls the vehicle lamp 70 based on the information that shows the circumstances in front of a subject vehicle, such as the image that is captured by the capturing unit 30.

### (DELAYING PROCESSING FOR DELAYING SWITCHING OF LIGHT DISTRIBUTION PATTERN)

The lamp controller 40 of this embodiment detects the presence and position of an object, which should not be irradiated, such as a forward vehicle or a pedestrian, according to the signal output from the controller 50 based on an image that is taken in front of a subject vehicle by the capturing unit 30. Here, the object, which should not be irradiated, may be, for example, an object that should preferably not be irradiated with a high beam light distribution pattern so as not to be subjected to glare. The lamp controller 40 determines an optimum light distribution pattern, which can secure visibility and reduce the glare directed at an object, among a plurality of kinds of light distribution patterns; and controls the shade rotating motor 28, the swivel actuator 222, and the like through the power circuit 60 so as to form the determined light distribution pattern. Meanwhile, this control may be performed by the combination of the lamp controller 40 and the controller 50, or may be performed by any one of the lamp controller 40 and the controller 50. Further, the lamp controller 40 or the controller 50 may be disposed inside or outside the vehicle lamp 70.

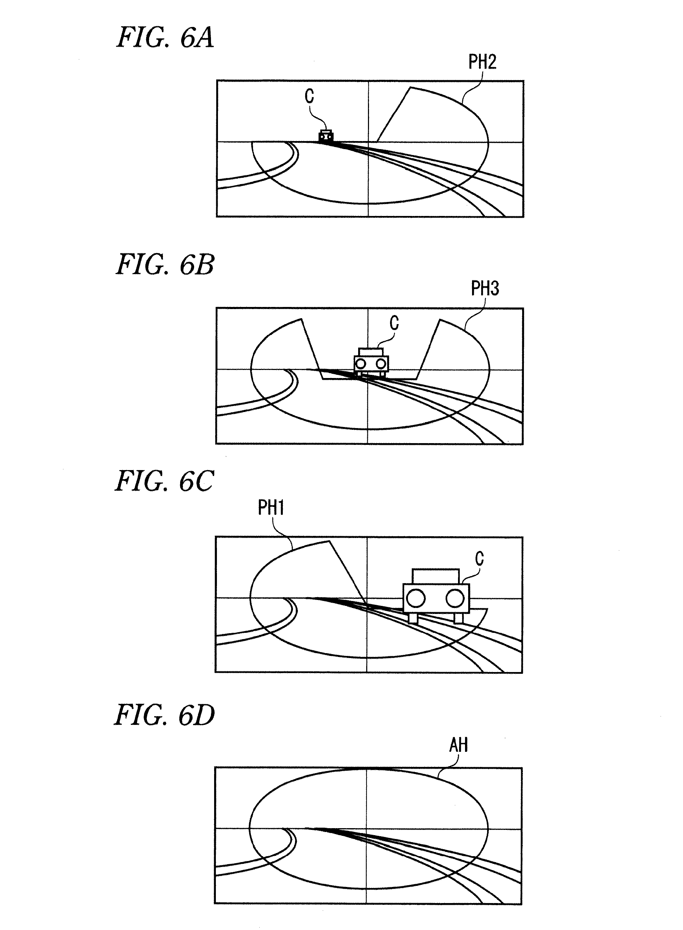

Figs. 6A to 6D are views continuously showing the change of a light distribution pattern when a light distribution pattern is immediately switched to an appropriate light distribution pattern without delay processing. Meanwhile, Fig. 6 shows a road that is curved to the left side, but the change of a light distribution pattern is the same in the case of a straight road.

If oncoming vehicles are present, a traveling subject vehicle forms a low beam light distribution pattern Lo shown in Fig. 5A so as not to direct glare at the oncoming vehicles immediately before passing the oncoming vehicles. In this state, when the next oncoming vehicle C approaches the subject vehicle from afar on the opposite lane of the road, which is curved to the left side, after the subject vehicle passes the foremost oncoming vehicle, the oncoming vehicle C is positioned on the left side of the middle in the image captured the capturing unit 30 of the vehicle lamp system 100 (see Fig. 6A). For this reason, as shown in Fig. 5D, the lamp controller 40 controls the respective parts so as to form the second partial high beam light distribution pattern PH2 where light corresponding to the left upper half of the complete high beam light distribution pattern is blocked.

When the oncoming vehicle C further approaches the subject vehicle, the oncoming vehicle C is positioned in the middle in the image captured the capturing unit 30 (see Fig. 6B). For this reason, as shown in Fig. 5E, the lamp controller 40 controls the respective parts so as to form the third partial high beam light distribution pattern PH3 where light corresponding to the middle upper half of the complete high beam light distribution pattern is blocked.

After that, when the oncoming vehicle C still further approaches the subject vehicle, the oncoming vehicle C is positioned on the right side of the middle in the image captured the capturing unit 30 (see Fig. 6C). For this reason, as shown in Fig. 5C, the lamp controller 40 controls the respective parts so as to form the first partial high beam light distribution pattern PH1 where light corresponding to the right upper half of the complete high beam light distribution pattern is blocked.

Then, when the subject vehicle has passed the oncoming vehicle C and it is detected again that a forward vehicle is not present, the lamp controller 40 controls the respective parts so as to form the complete high beam light distribution pattern AH again (see Fig. 6D).

In this way, the vehicle lamp system 100 frequently switches a light distribution pattern in the order of the low beam light distribution pattern Lo, the second partial high beam light distribution pattern PH2, the third partial high beam light distribution pattern PH3, the first partial high beam light distribution pattern PH1, and the complete high beam light distribution pattern AH. The frequent switching of a light distribution pattern causes a driver to feel uncomfortable.

Accordingly, the inventors have devised the vehicle lamp system 100. As an object, which should not be irradiated, such as a forward vehicle or a pedestrian moves, the vehicle lamp system 100 does not immediately form an optimum light distribution pattern, and forms a light distribution pattern, which is optimal at that time, after some time passes. Specifically, the controller 50 or the lamp controller 40 has a delay timer function that divides the captured image into a plurality of areas and counts time where vehicles are not present in each area. The delay timer function may be realized by any one of software and hardware, and may be realized by, for example, an analog circuit such as a CR time constant circuit or an existing counter. Further, the vehicle lamp 70 irradiates an area where the count number of a lighting delay timer exceeds a predetermined lighting delay time, as an irradiation area from areas that are not irradiated till then. That is, the vehicle lamp system allows the formation of a high beam light distribution pattern that irradiates an area where forward vehicles are not present in a certain area over a predetermined time.

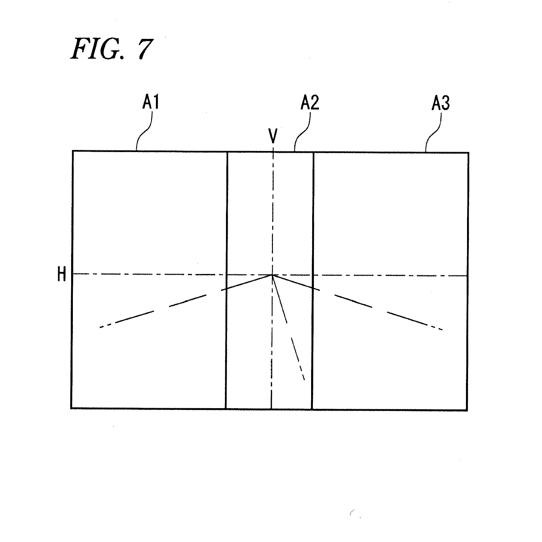

Fig. 7 is a schematic view showing that an image captured the capturing unit of this embodiment is divided into a plurality of areas. An area A 1 shown in Fig. 7 is a portion that extends from the middle portion of the captured image to the left end of the captured image. When it is detected that a forward vehicle is present only in the area A1, the second partial high beam light distribution pattern (see Fig. 5D) is generally optimal. Meanwhile, an area A3 shown in Fig. 7 is a portion that extends from the middle portion of the captured image to the right end of the captured image. When it is detected that a forward vehicle is present only in the area A3, the first partial high beam light distribution pattern (see Fig. 5C) is generally optimal. Further, an area A2 shown in Fig. 7 is the middle portion of the captured image. When it is detected that a forward vehicle is present only in the area A2, the third partial high beam light distribution pattern is generally optimal.

There will be described below in detail means for suppressing the frequent switching of a light distribution pattern by delaying the lighting of the high beam light distribution pattern when the vehicle lamp system 100 controls the vehicle lamp 70 in a direction where the irradiation areas are widened as in the case where a light distribution pattern is switched from the low beam light distribution pattern Lo to the complete high beam light distribution pattern AH or the partial high beam light distribution patterns PH1 to PH3.

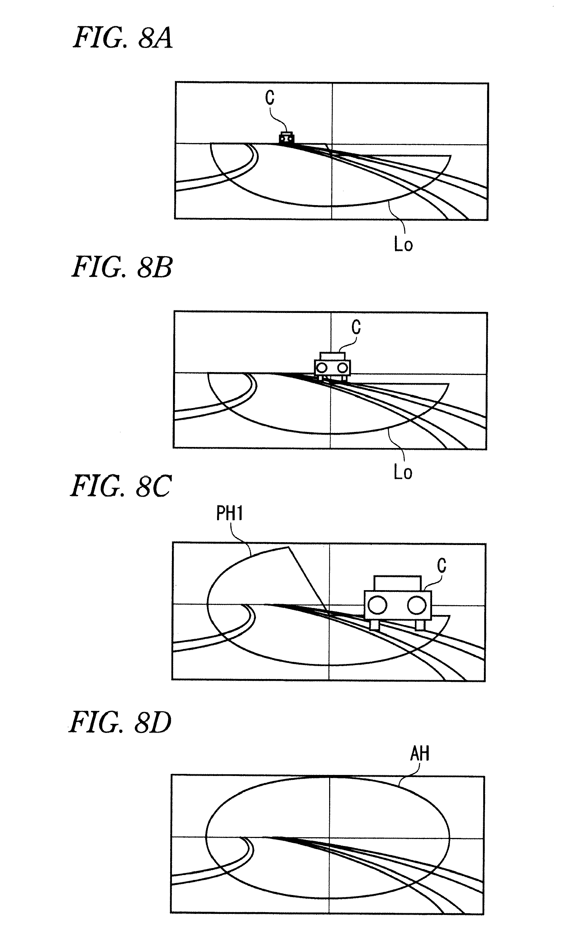

Figs. 8A to 8D are views continuously showing the change of a light distribution pattern when a light distribution pattern is switched through the delay processing of this embodiment.

If oncoming vehicles are present as described above, a traveling subject vehicle forms the low beam light distribution pattern Lo so as not to direct glare at the oncoming vehicles immediately before passing the oncoming vehicles.

In this state, when the next oncoming vehicle C approaches the subject vehicle from afar on the opposite lane of the road, which is curved to the left side, after the subject vehicle passes the foremost oncoming vehicle, the oncoming vehicle C is positioned on the left side of the middle in the image captured the capturing unit 30 of the vehicle lamp system 100 (see Fig. 8A). For this reason, the lamp controller 40 controls the respective parts so as to form the second partial high beam light distribution pattern PH2 if immediately switching a light distribution pattern. That is, in this state, the information about the position of an oncoming vehicle has contents where the irradiation areas of the low beam light distribution pattern Lo are allowed to be widened to the irradiation areas of the high beam light distribution pattern.

However, the vehicle lamp system 100 according to this embodiment continues to form the low beam light distribution pattern Lo without switching a light distribution pattern by counting time using the lighting delay timer corresponding to the area A3 where a forward vehicle is not present at this time. At this time, the count number of the lighting delay timer corresponding to the area A3 does not exceed a predetermined lighting delay time.

When the oncoming vehicle C further approaches the subject vehicle, the oncoming vehicle C is positioned in the middle in the image captured the capturing unit 30 (see Fig. 8B). For this reason, the lamp controller 40 controls the respective parts so as to form the third partial high beam light distribution pattern PH3 if immediately switching a light distribution pattern.

However, the vehicle lamp system 100 according to this embodiment continues to form the low beam light distribution pattern Lo without switching a light distribution pattern by counting time using the lighting delay timers corresponding to the areas A1 and A3 where a forward vehicle is not present at this time. At this time, the count numbers of the lighting delay timers corresponding to the areas A1 and A3 do not exceed a predetermined lighting delay time.

After that, when the oncoming vehicle C still further approaches the subject vehicle, the oncoming vehicle C is positioned on the right side of the middle in the image captured the capturing unit 30 (see Fig. 8C). Since a forward vehicle is present in the area A3 at this time, the lighting delay timer corresponding to the area A3 is reset to 0. Further, for example, if the count number of the lighting delay timer corresponding to the area A1 where a forward vehicle is not present even at this time exceeds a predetermined lighting delay time, the lamp controller 40 controls the respective parts so as to form the first partial high beam light distribution pattern PH1.

Then, when the subject vehicle has passed the oncoming vehicle C and it is detected again that a forward vehicle is not present, the lamp controller 40 controls the respective parts so as to form the complete high beam light distribution pattern AH again (see Fig. 8D).

Despite the same circumstances as the circumstances shown in Fig. 6, the vehicle lamp system 100, which has performed delay processing in this way, switches a light distribution pattern only in the order of the low beam light distribution pattern Lo, the first partial high beam light distribution pattern PH1, and the complete high beam light distribution pattern AH, and does not switch a light distribution pattern to the second partial high beam light distribution pattern PH2 or the third partial high beam light distribution pattern.

As described above, the controller 50 or the lamp controller 40 controls the headlight unit 210 so as to irradiate a corresponding irradiation area after a predetermined lighting delay time has passed, when the information about the position of a forward vehicle or a pedestrian has contents where the irradiation areas of the high beam light distribution pattern are allowed to be widened. For this reason, the frequent change of an irradiation area is suppressed without immediately following the change of the information about the position of a forward vehicle or the like that shows the circumstances in front of the subject vehicle. As a result, the uncomfortable feeling of a driver is reduced.

### (DELAY TIMER COUNT PROCESSING)

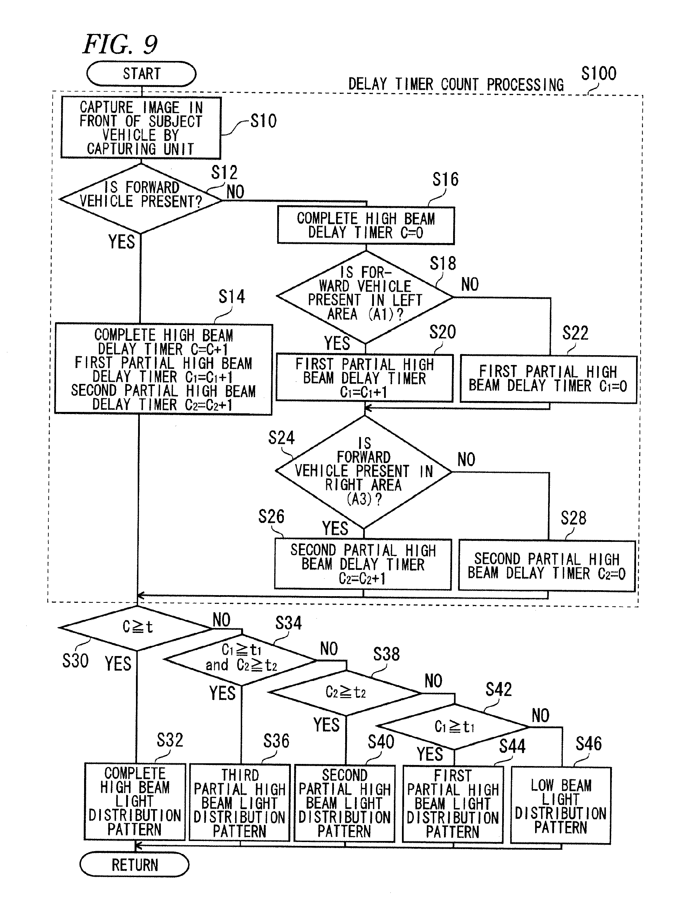

Next, the above-mentioned delay processing will be described in more detail. Fig. 9 is a view showing an example of a flowchart of light distribution control of this embodiment.

Processing shown in Fig. 9 is repeatedly performed at predetermined intervals when an automatic control mode of a light distribution pattern is selected. When the processing starts, delay timer count processing S100 is performed. First, an image in front of the subject vehicle is captured by the capturing unit 30 such as a camera (S 10). Then, whether a forward vehicle is present is detected based on the data of the image by the controller 50 (S12).

If a forward vehicle is not detected (Yes in S12), a forward vehicle is not present in the areas A1 and A3 shown in Fig. 7 and is not present in any area in front of the subject vehicle. Accordingly, a count C of a lighting delay timer T corresponding to the irradiation area of the complete high beam light distribution pattern is increased by 1. Further, a count C₁ of a lighting delay timer T1 corresponding to the irradiation area of the above-mentioned first partial high beam light distribution pattern is increased by 1. Furthermore, a count C₂ of a lighting delay timer T2 corresponding to the irradiation area of the second partial high beam light distribution pattern is increased by 1 (S 14).

Meanwhile, if a forward vehicle is detected (No in S12), it is clear that a forward vehicle is present in the irradiation area of at least the complete high beam light distribution pattern. Accordingly, the count C of the lighting delay timer T corresponding to the irradiation area is reset to 0 (C=0) (S16). Further, it is determined whether the forward vehicle is present on the left side (the area A1 shown in Fig. 7) in front of the subject vehicle (S18). If the forward vehicle is not present at least in the area A1 (Yes in S18), the count C₁ of the lighting delay timer T1 corresponding to the irradiation area of the first partial high beam light distribution pattern is increased by 1 (S20). Meanwhile, if the forward vehicle is present in the area A1 (No in S18), the count C₁ of the lighting delay timer T1 is reset to 0 (C₁=0) (S20).

Likewise, it is determined whether the forward vehicle is present on the right side (the area A3 shown in Fig. 7) in front of the subject vehicle (S24). If the forward vehicle is not present at least in the area A3 (Yes in S24), the count C₂ of the lighting delay timer T2 corresponding to the irradiation area of the second partial high beam light distribution pattern is increased by 1 (S26). Meanwhile, if the forward vehicle is present in the area A3 (No in S24), the count C₂ of the lighting delay timer T2 is reset to 0 (C₂=0) (S28).

After a series of delay timer count processing S100 is performed, it is determined whether the count C of the lighting delay timer T corresponding to the irradiation area of the complete high beam light distribution pattern is equal to or larger than a predetermined lighting delay time t (S30). If the count C is equal to or larger than the predetermined lighting delay time t (Yes in S30), the vehicle lamp system 100 irradiates the area in front with the complete high beam light distribution pattern (S32). Meanwhile, if the count C does not reach the predetermined lighting delay time t (No in S30), it is determined whether the count C₁ of the lighting delay timer T1 corresponding to the irradiation area of the first partial high beam light distribution pattern is equal to or larger than a predetermined lighting delay time t₁ and the count C₂ of the lighting delay timer T2 corresponding to the irradiation area of the second partial high beam light distribution pattern is equal to or larger than a predetermined lighting delay time t₂ (S34).

If the count C₁ of the lighting delay timer T1 is equal to or larger than the predetermined lighting delay time t₁ and the count C₂ of the lighting delay timer T2 is equal to or larger than the predetermined lighting delay time t₂ (Yes in S34), forward vehicles are not present at least in the left and right areas A1 and A3 in front of the subject vehicle (see Fig. 7). Accordingly, the vehicle lamp system 100 irradiates the area in front with the third partial high beam light distribution pattern (S36). Meanwhile, if the count C₁ of the lighting delay timer T1 does not reach the predetermined lighting delay time t₁ or the count C₂ of the lighting delay timer T2 does not reach the predetermined lighting delay time t₂ (No in S34), it is determined whether the count C₂ of the lighting delay timer T2 is equal to or larger than the predetermined lighting delay time t₂ (S38).

If the count C₂ of the lighting delay timer T2 is equal to or larger than the predetermined lighting delay time t₂ (Yes in S38), a forward vehicle is not present at least in the left area A1 (see Fig. 7) in front of the subject vehicle. Accordingly, the vehicle lamp system 100 irradiates the area in front with the second partial high beam light distribution pattern (S40). Meanwhile, if the count C₂ of the lighting delay timer T2 does not reach the predetermined lighting delay time t₂ (No in S38), it is determined whether the count C₁ of the lighting delay timer T1 is equal to or larger than the predetermined lighting delay time t₁ (S42).

If the count C₁ of the lighting delay timer T1 is equal to or larger than the predetermined lighting delay time t₁ (Yes in S42), a forward vehicle is not present at least in the right area A3 (see Fig. 7) in front of the subject vehicle. Accordingly, the vehicle lamp system 100 irradiates the area in front with the first partial high beam light distribution pattern (S44). Meanwhile, if the count C₁ of the lighting delay timer T1 does not reach the predetermined lighting delay time t₁ (No in S42), the vehicle lamp system 100 irradiates the area in front with the low beam light distribution pattern (S46).

Here, the predetermined lighting delay times t, t₁, t₂, and t₃ may be set to any values that are not unsuitable for control. However, in order to secure visibility by an appropriate irradiation area and reduce driver discomfort at the same time, the predetermined lighting delay times may be set to optimal values through experiments or simulations. For example, the predetermined lighting delay times t₁, t₂, and t₃, which serve as the reference when a light distribution pattern is switched to the partial high beam light distribution pattern, may be set to the same value.

When it is shown that forward vehicles are present in the irradiation areas of the various high beam light distribution patterns, as described above, the lamp controller 40 or the controller 50 resets the counts of the lighting delay timers corresponding to the irradiation areas where the forward vehicles are present (S16, S22, and S28) and counts lighting delay time from zero again. The irradiation areas of the complete high beam light distribution pattern include the irradiation areas of the other partial high beam light distribution patterns, and are larger than the irradiation areas of the other partial high beam light distribution patterns. For this reason, the count C of the lighting delay timer T corresponding to the complete high beam light distribution pattern is apt to be reset as compared to the count C₁, C₂, and C₃ of the lighting delay timers T1, T2, and T3 corresponding to the partial high beam light distribution patterns. That is, the count C is always equal to or smaller than the counts C₁, C₂, and C₃.

For this reason, if a predetermined lighting delay time t, which is the reference of the switching of a light distribution pattern, is longer than predetermined lighting delay times t₁, t₂, and t₃, a light distribution pattern is switched in the order of the low beam light distribution pattern Lo, the partial high beam light distribution pattern AH, and the complete high beam light distribution pattern PH even though a state where a forward vehicle is not present continues.

Accordingly, in this embodiment, the lighting delay time t₁ (t₂, t₃) corresponding to the irradiation area of the partial high beam light distribution pattern is set to be equal to or longer than the lighting delay time t corresponding to the irradiation area of the complete high beam light distribution pattern.

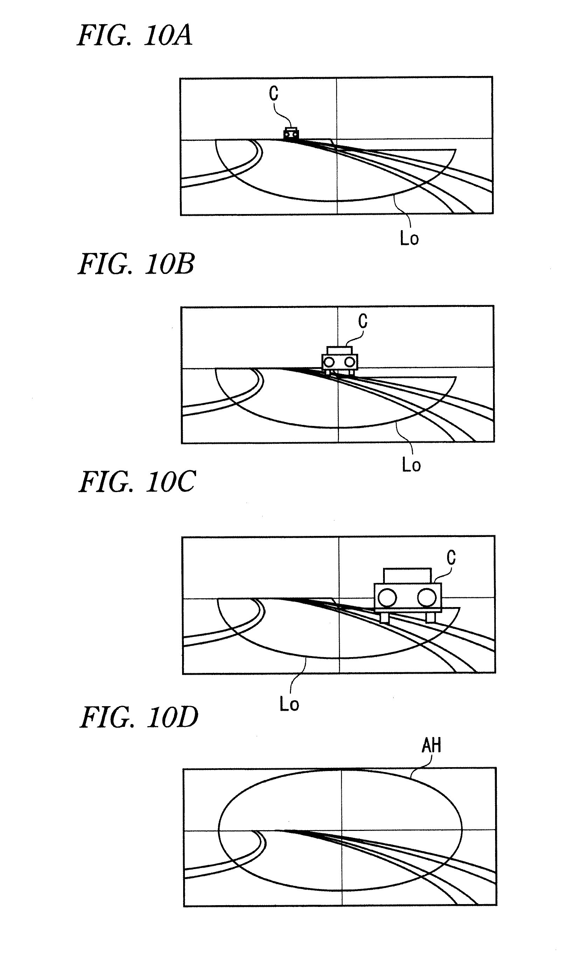

Figs. 10A to 10D are views continuously showing the change of a light distribution pattern when the lighting delay time t₁ (t₂, t₃) is set to be equal to or longer than the lighting delay time t. A light distribution pattern has been changed to the first partial high beam light distribution pattern PH1 in Fig. 8C. However, the count C₁ of the lighting delay timer T1 corresponding to the first partial high beam light distribution pattern PH1 does not exceed the lighting delay time t₁ at this time in Fig. 10C, the low beam light distribution pattern Lo remains as it is. After that, when the count C of the lighting delay timer T first exceeds the lighting delay time t, the complete high beam light distribution pattern is formed (Fig. 10D). Meanwhile, as the lighting delay time t₁ (t₂, t₃) becomes longer than the lighting delay time t, a light distribution pattern is apt to be directly changed to the complete high beam light distribution pattern AH from the low beam light distribution pattern Lo. However, the responsiveness of the formation of the partial high beam light distribution pattern is reduced. For this reason, each of the predetermined lighting delay times may be appropriately set based on experiments or simulations. For example, the lighting delay time t may be set in the range of 1.5 to 2.5 seconds, and the lighting delay time t₁ (t₂, t₃) may be in the range of 3 to 5 seconds.

Accordingly, even when it is shown that a forward vehicle is present in the irradiation areas of the high beam light distribution pattern, after that, the vehicle lamp system 100 can directly form the complete high beam light distribution pattern without forming a partial high beam light distribution pattern from the previous light distribution pattern. For this reason, the frequent change of a light distribution pattern is suppressed, so that driver discomfort is reduced.

### (LIGHT DISTRIBUTION CANDIDATE-DETERMINATION PROCESSING)

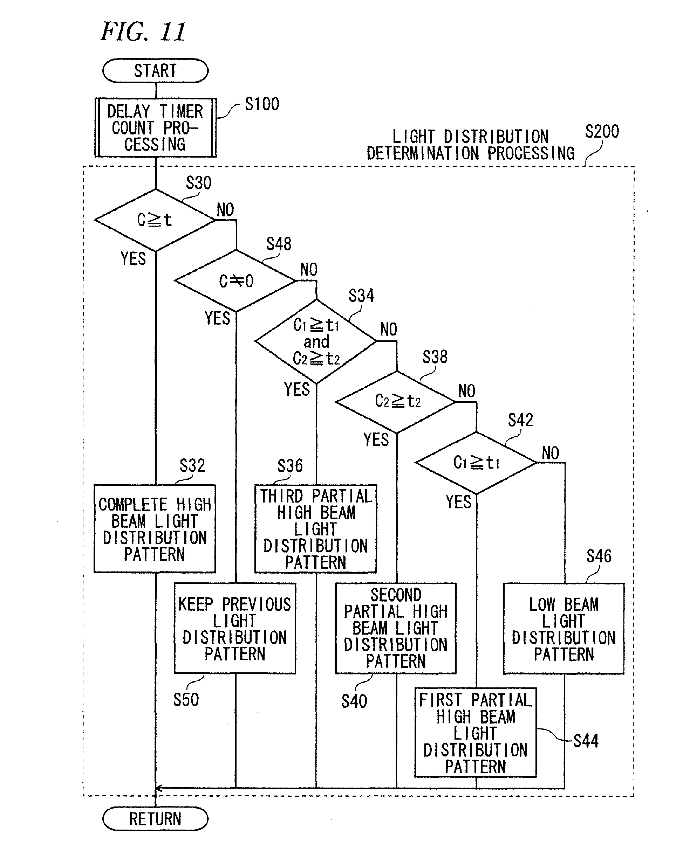

Fig. 11 is a view showing a modification of the flowchart of light distribution control shown in Fig. 9. Processing shown in Fig. 11 is characterized in that light distribution candidate-determination processing S200 is performed after the delay timer count processing S100 shown in Fig. 9. Meanwhile, since being the same as those shown in Fig. 9, the delay timer count processing S100 and the steps S30 to S46 will be appropriately omitted in the following description.

If the count C of the lighting delay timer T corresponding to the irradiation area of the complete high beam light distribution pattern does not reach a predetermined lighting delay time t (No in S30), it is determined whether the count C is 0 (S48). If the count C is 0 (Yes in S48), it is shown that a forward vehicle is not present in the irradiation areas of the high beam light distribution pattern in front of a subject vehicle at this time. For this reason, a partial high beam light distribution pattern does not need to be formed in this state. Meanwhile, if the count C is 0 (No in S48), the processing to be performed after S34 is the same as described above.

Accordingly, if a forward vehicle is not present in the irradiation areas of the complete high beam light distribution pattern when the lighting delay time corresponding to any one of the irradiation areas of the partial high beam light distribution pattern is completely counted, the lamp controller 40 or the controller 50 suspends the irradiation of the irradiation area, to which the completely counted lighting delay time corresponds, being performed with the partial high beam light distribution pattern and keeps the formation of the previous light distribution pattern (S50). Then, when the count C of the lighting delay timer T reaches the predetermined lighting delay time t, a complete high beam light distribution pattern is formed (S32).

Accordingly, for example, if an object, which should not be irradiated, present in the other irradiation area is out of the range of all the irradiation areas of the high beam light distribution pattern until the lighting delay time corresponding to any one of the irradiation areas of the partial high beam light distribution pattern is completely counted, the vehicle lamp system can directly form the complete high beam light distribution pattern without forming a partial high beam light distribution pattern from the previous light distribution pattern. For this reason, as compared to the case where the vehicle lamp system changes a light distribution pattern from the previous light distribution pattern to the partial high beam light distribution pattern of the irradiation area to which the completely counted lighting delay time corresponds and changes the light distribution pattern to the complete high beam light distribution pattern in a short time, the frequent change of a light distribution pattern is suppressed. As a result, driver discomfort is reduced.

### (PREDICTION OF MOVEMENT OF VEHICLE)

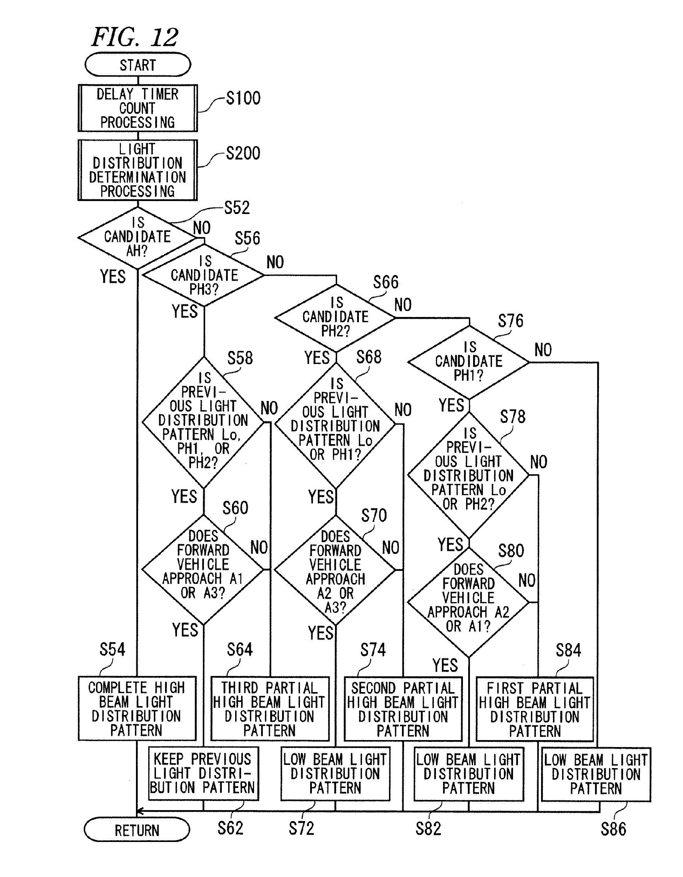

Fig. 12 is a view showing a modification of the flowchart of light distribution control shown in Fig. 11. In processing shown in Fig. 12, light distribution patterns selected in the respective steps S32, S36, S40, S44, and S46 of the light distribution candidate-determination processing S200 shown in Fig. 11 are not immediately formed. The following processing is performed while the selected light distribution patterns are used as candidates. Meanwhile, since being the same as the processing shown in Figs. 9 and 11, the delay timer count processing S100 and the light distribution candidate-determination processing S200 will be appropriately omitted in the following description.

A candidate of a light distribution pattern, which is optimal at that time, is selected by the light distribution candidate-determination processing S200. Then, it is determined whether the light distribution pattern as a candidate is the complete high beam light distribution pattern AH (S52). If the light distribution pattern as a candidate is the complete high beam light distribution pattern AH (Yes in S52), the vehicle lamp system 100 irradiates the area in front with the complete high beam light distribution pattern AH (S54). Meanwhile, if the light distribution pattern as a candidate is not the complete high beam light distribution pattern AH (No in S52), it is determined whether the light distribution pattern as a candidate is the third partial high beam light distribution pattern PH3 (S56).

If the light distribution pattern as a candidate is the third partial high beam light distribution pattern PH3 (Yes in S56), it is determined whether the previous light distribution pattern is any one of the low beam light distribution pattern Lo, the first partial high beam light distribution pattern PH1, and the second partial high beam light distribution pattern PH2 (S58). That is, it is determined whether a forward vehicle present in the area, which is not irradiated with the previous light distribution pattern, is moving in an image. If the previous light distribution pattern is any one of the low beam light distribution pattern Lo, the first partial high beam light distribution pattern, and the second partial high beam light distribution pattern (Yes in S58), it is estimated that a forward vehicle is moving to the middle portion of the third partial high beam light distribution pattern PH3 as a candidate.

Further, it is determined whether a forward vehicle is approaching the area A1 or A3 (see Fig. 7) in front of the subject vehicle (S60). Accordingly, it may be possible to estimate whether a light distribution pattern will be switched shortly. That is, if a forward vehicle present in the area A2 is approaching the area A1 or A3 (Yes in S60), it is predicted that a light distribution pattern will be switched shortly. Accordingly, at this time, the vehicle lamp system 100 does not switch a light distribution pattern to the third partial high beam light distribution pattern and keeps the formation of the previous light distribution pattern (S62). Meanwhile, it may be possible to determine whether a forward vehicle is approaching through, for example, the trajectories of the lights of the forward vehicle.

Meanwhile, if the previous light distribution pattern is not any one of the low beam light distribution pattern Lo, the first partial high beam light distribution pattern PH1, and the second partial high beam light distribution pattern PH2 (No in S58) or if a forward vehicle present in the area A2 is not approaching the area A1 or A3 (No in S60), it is determined that the movement of a forward vehicle is not enough for a light distribution pattern to be switched after a short time thereafter and the vehicle lamp system 100 irradiates the area in front with the third partial high beam light distribution pattern PH3 that is a candidate (S64).

Then, if the light distribution pattern as a candidate is not the third partial high beam light distribution pattern PH3 (No in S56), it is determined whether the light distribution pattern as a candidate is the second partial high beam light distribution pattern PH2 (S66). If the light distribution pattern as a candidate is the second partial high beam light distribution pattern PH2 (Yes in S66), it is determined whether the previous light distribution pattern is the low beam light distribution pattern Lo or the first partial high beam light distribution pattern PH1 (S68). That is, it is determined whether a forward vehicle present in the area, which is not irradiated with the previous light distribution pattern, moves in an image. If the previous light distribution pattern is any one of the low beam light distribution pattern Lo and the first partial high beam light distribution pattern PH1 (Yes in S68), it is estimated that a forward vehicle is moving to the vicinity of the area A1 of the second partial high beam light distribution pattern PH2 as a candidate.

Further, it is determined whether a forward vehicle is approaching the area A2 or A3 (see Fig. 7) in front of the subject vehicle (S70). Accordingly, it may be possible to estimate whether a light distribution pattern is switched shortly. That is, if a forward vehicle present in the area A1 is approaching the area A2 or A3 (Yes in S70), it is predicted that a light distribution pattern is switched shortly. Accordingly, at this time, the vehicle lamp system 100 switches a light distribution pattern not to the second partial high beam light distribution pattern PH2 but to the low beam light distribution pattern Lo and irradiates the area in front (S72).

Meanwhile, if the previous light distribution pattern is not any one of the low beam light distribution pattern Lo and the first partial high beam light distribution pattern PH1 (No in S68) or if a forward vehicle present in the area A1 is not approaching the area A2 or A3 (No in S70), it is determined that the movement of a forward vehicle is not enough for a light distribution pattern to be switched after a short time thereafter and the vehicle lamp system 100 irradiates the area in front with the second partial high beam light distribution pattern PH2 that is a candidate (S74).

Then, if the light distribution pattern as a candidate is not the second partial high beam light distribution pattern PH2 (No in S66), it is determined whether the light distribution pattern as a candidate is the first partial high beam light distribution pattern PH1 (S76). If the light distribution pattern as a candidate is the first partial high beam light distribution pattern PH1 (Yes in S76), it is determined whether the previous light distribution pattern is the low beam light distribution pattern Lo or the second partial high beam light distribution pattern PH2 (S78). That is, it is determined whether a forward vehicle present in the area, which is not irradiated with the previous light distribution pattern, is moving in an image. If the previous light distribution pattern is any one of the low beam light distribution pattern Lo and the second partial high beam light distribution pattern PH2 (Yes in S78), it is estimated that a forward vehicle is moving to the vicinity of the area A3 of the first partial high beam light distribution pattern PH1 as a candidate.

Further, it is determined whether a forward vehicle is approaching the area A2 or A1 (see Fig. 7) in front of the subject vehicle (S80). Accordingly, it may be possible to estimate whether a light distribution pattern is switched shortly. That is, if a forward vehicle present in the area A3 is approaching the area A2 or A1 (Yes in S80), it is predicted that a light distribution pattern is switched shortly. Accordingly, at this time, the vehicle lamp system 100 switches a light distribution pattern not to the first partial high beam light distribution pattern PH1 but to the low beam light distribution pattern Lo and irradiates the area in front (S82).

Meanwhile, if the previous light distribution pattern is not any one of the low beam light distribution pattern Lo and the second partial high beam light distribution pattern PH2 (No in S78) or if a forward vehicle present in the area A3 is not approaching the area A2 or A1 (No in S80), it is determined that the movement of a forward vehicle is not enough for a light distribution pattern to be switched after a short time thereafter and the vehicle lamp system 100 irradiates the area in front with the first partial high beam light distribution pattern PH1 that is a candidate (S84). Meanwhile, if the light distribution pattern as a candidate is also not the first partial high beam light distribution pattern PH1 (No in S76), the vehicle lamp system 100 switches a light distribution pattern to the low beam light distribution pattern Lo and irradiates the area in front (S86).

As described above, even though the lighting delay time corresponding to the irradiation area of, for example, the second partial high beam light distribution pattern PH2 is completely counted, that is, even though the second partial high beam light distribution pattern PH2 is selected as the candidate of a light distribution pattern, the lamp controller 40 or the controller 50 suspends the irradiation of the second partial high beam light distribution pattern PH2 when it is shown that a forward vehicle is approaching the area A2 or A3, which is a part of the irradiation areas of the second partial high beam light distribution pattern; and allows the area in front to be irradiated with the second partial high beam light distribution pattern PH2 when a forward vehicle is not approaching the area A2 or A3.

When a forward vehicle is approaching the irradiation area to which the completely counted lighting delay time corresponds, a possibility that the forward vehicle is included in the irradiation area is increased afterward. For this reason, even if the vehicle lamp system 100 forms a partial high beam light distribution pattern of the irradiation area to which the completely counted lighting delay time corresponds, the vehicle lamp system 100 switches a light distribution pattern to another light distribution pattern after a short time thereafter. Accordingly, when it is anticipated that the irradiation area to which the completely counted lighting delay time corresponds will not continue to be irradiated with the partial high beam light distribution pattern, the vehicle lamp system 100 suspends the switching of the previous light distribution pattern to the partial high beam light distribution pattern that irradiates the irradiation area. Accordingly, the frequent change of a light distribution pattern is suppressed, so that driver discomfort is reduced.

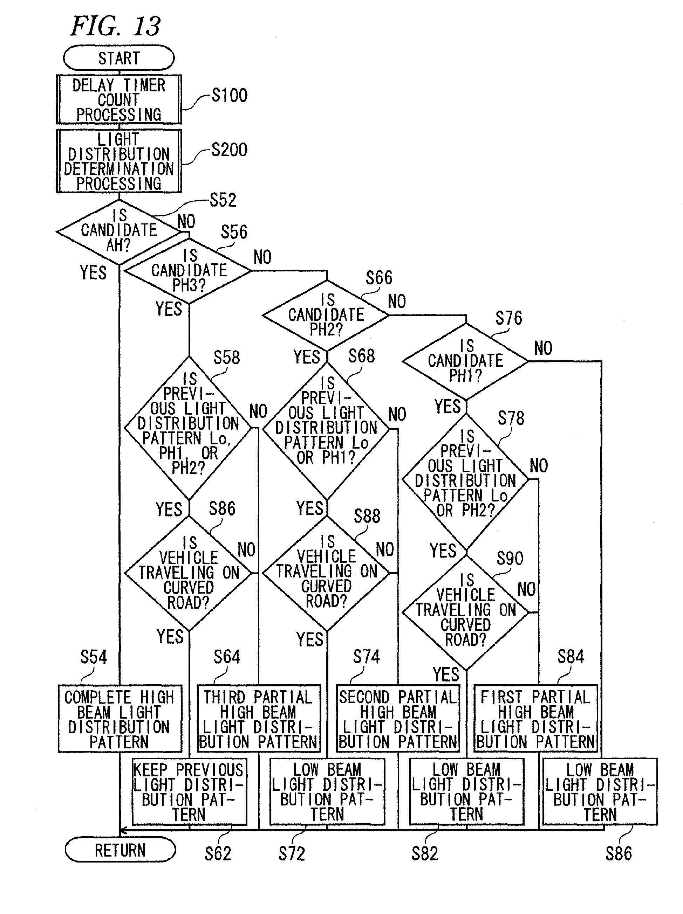

Fig. 13 is a view showing a modification of the flowchart of light distribution control shown in Fig. 12. Processing shown in Fig. 13 is characterized in that steps S86, S88, and S90 of determining whether a subject vehicle is traveling on a curved road are added instead of the steps S60, S70, and S80 shown in Fig. 12. When a subject vehicle is traveling on a curved road, an object, which should not be irradiated, is often seen to have a lot of movement in front of the subject vehicle in a vehicle width direction as compared to a case where the subject vehicle is traveling on a straight road. For example, as described with reference to Fig. 6, when a subject vehicle passes a forward vehicle, particularly, an oncoming vehicle while traveling on a curved road, the oncoming vehicle is seen so as to cross a captured image until passing the subject vehicle from a distance. For this reason, a partial high beam light distribution pattern, which irradiates a part of the irradiation areas of the high beam light distribution pattern, is apt to be switched in a short time.

If it is determined that a subject vehicle is traveling on a curved road (Yes in S86, Yes in S88, and Yes in S90) in the processing shown in Fig. 13, the previous light distribution pattern is kept or a light distribution pattern is switched to the low beam light distribution pattern Lo without being switched to a partial high beam light distribution pattern serving as a candidate. If it is not determined that a subject vehicle is traveling on a curved road (No in S86, No in S88, and No in S90), the same steps as the steps S64, S74, and S84 shown in Fig. 12 are performed.

As described above, if it is determined that a subject vehicle is traveling on a curved road when the lighting delay time corresponding to any one of the irradiation areas of the partial high beam light distribution pattern is completely counted, the lamp controller 40 or the controller 50 suspends the irradiation of a corresponding high beam light distribution pattern. Accordingly, the frequent change of a light distribution pattern is suppressed, so that driver discomfort is reduced.

It may be possible to easily perform the determination of a curved road by a general technique, for example, the steering angle information of a steering sensor, the information about a difference in the speed between left and right wheels based on wheel speed sensors, or the like.

Meanwhile, if a forward vehicle is a preceding vehicle, the relative movement between the forward vehicle and the preceding vehicle is small. Accordingly, the movement of the forward vehicle is small in the image. For this reason, the steps S86, S88, and S90 of determining whether a subject vehicle is traveling on a curved road may be added after the respective steps in addition to the steps S60, S70, and S80 shown in Fig. 12. According to this processing, the accuracy of the selection of an optimum light distribution pattern is improved and the frequent switching of a light distribution pattern is further suppressed.

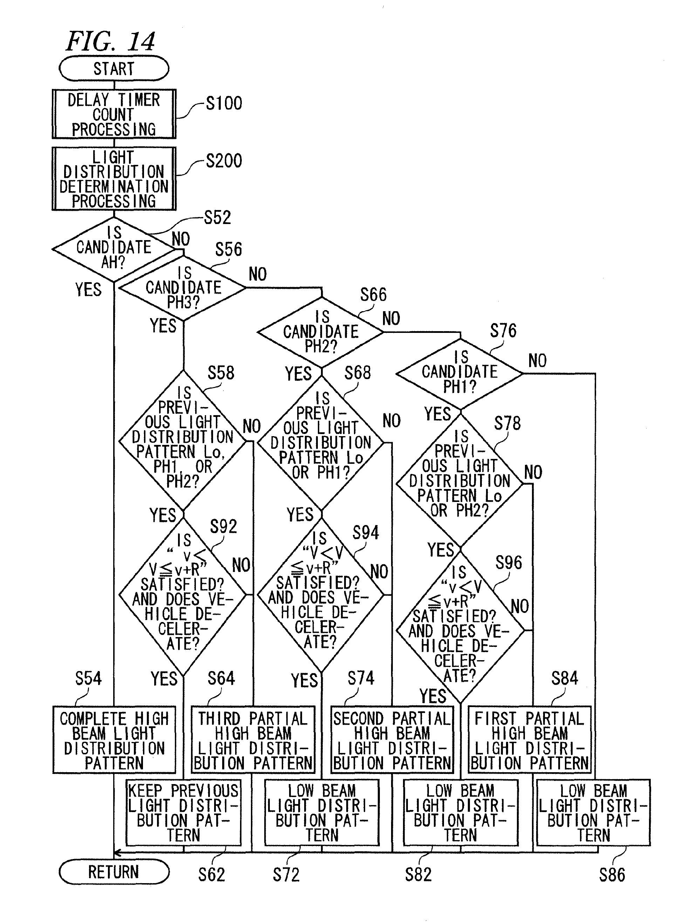

Fig. 14 is a view showing a modification of the flowchart of light distribution control shown in Fig. 12. Processing shown in Fig. 14 is characterized in that steps S92, S94, and S96 of determining whether it is predicted that the speed of a subject vehicle falls below the lower limit of a vehicle speed where automatic light distribution control is performed are added instead of the steps S60, S70, and S80 shown in Fig. 12. If a lower limit of a vehicle speed where the automatic switching of a light distribution pattern is performed is set, there is a concern that a light distribution pattern, which makes persons feel uncomfortable, is switched for example, when the subject vehicle stops due to a traffic signal after passing an oncoming vehicle.

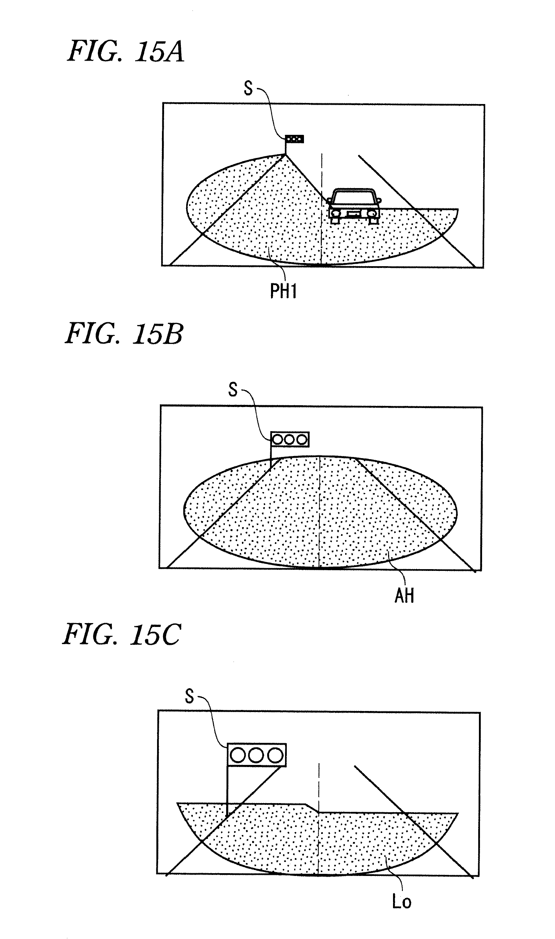

Figs. 15A to 15C are views continuously showing the change of a light distribution pattern in an example of automatic light distribution control. If an oncoming vehicle is present in front of the subject vehicle as shown in Fig. 15A while the subject vehicle is traveling on a straight road, the vehicle lamp system 100 irradiates the area in front with the first partial high beam light distribution pattern PH1. Since a traffic light S positioned in front of the subject vehicle shows a red signal at this time, the subject vehicle is decelerating. In this state, after the subject vehicle passes an oncoming vehicle, a light distribution pattern is immediately switched to the complete high beam light distribution pattern AH by automatic light distribution control (Fig. 15B). However, since the subject vehicle is already decelerating, the speed of the subject vehicle falls below the lower limit of a vehicle speed where automatic light distribution control is performed when the subject vehicle approaches the stop position of the traffic light S. Accordingly, the vehicle lamp system 100 switches a light distribution pattern to the low beam light distribution pattern Lo from the complete high beam light distribution pattern AH and irradiates the area in front (Fig. 15C). For this reason, the switching of a light distribution pattern to the complete high beam light distribution pattern, which is not often necesessary when the speed of the subject vehicle is low, contributes to driver discomfort in terms of automatic light distribution control.

Accordingly, as shown in Fig. 14, it is determined whether it is predicted that the speed of the subject vehicle falls below the lower limit v of a a vehicle speed where automatic light distribution control is performed, that is, whether the subject vehicle is decelerating and the speed of the subject vehicle is a vehicle speed close to the lower limit. Specifically, if it is determined that "v<V≤v+R" is satisfied and the subject vehicle is decelerating (Yes in S92, Yes in S94, and Yes in S96) when the speed of the subject vehicle is denoted by V, the previous light distribution pattern is kept or a light distribution pattern is switched to the low beam light distribution pattern Lo without being switched to a partial high beam light distribution pattern serving as a candidate. Here, R is a constant that is used to determine a range where this processing is performed, and is set to, for example, 10 km/h. When the subject vehicle is accelerating or if the speed V of the subject vehicle satisfies "v+R<V" (No in S92, No in S94, and No in S96), it is estimated that the subject vehicle does not stop after a short time thereafter. Accordingly, the same steps as the steps S64, S74, and S84 shown in Fig. 12 are performed.

As described above, when the lighting delay time corresponding to any one of the irradiation areas of the high beam light distribution pattern is completely counted, the lamp controller 40 or the controller 50 suspends the irradiation of the corresponding high beam light distribution pattern if the speed of the subject vehicle is shifted into a control area (v+R), which is higher than a control lower limit speed v of the vehicle lamp by a predetermined value, by deceleration; and performs the irradiation of the corresponding high beam light distribution pattern if the speed of the subject vehicle is shifted out of the control area by acceleration. Accordingly, a case where a high beam light distribution pattern is formed immediately before the speed of the subject vehicle falls below the control lower limit speed v of the vehicle lamp is suppressed.

It may be possible to easily detect acceleration and speed by a general technique based on, for example, the information of wheel speed sensors and the information of acceleration sensors.

Meanwhile, the steps S86, S88, and S90 of determining whether a subject vehicle is traveling on a curved road, or the step S92, S94, and S96 of determining whether it is predicted that the speed of the subject vehicle falls below the lower limit of a vehicle speed where automatic light distribution control is performed may be added after the respective steps in addition to the steps S60, S70, and S80 shown in Fig. 12.

The above-mentioned aspect may be described from another point of view. For example, the lamp controller 40 or the controller 50 is a controller for a vehicle lamp 70 that can form a high beam light distribution pattern which is divided into a plurality of irradiation areas in the vehicle width direction and of which the presence/non-presence of the irradiation of each irradiation area is switched. When controlling the vehicle lamp 70 based on the information that shows the circumstances in front of a subject vehicle and when the information has contents where the irradiation areas of the high beam light distribution pattern are allowed to be widened, the lamp controller 40 or the controller 50 irradiates a corresponding irradiation area after a predetermined lighting delay time passes.

Further, the vehicle lamp 70 forms a high beam light distribution pattern which is divided into a plurality of irradiation areas in the vehicle width direction and of which the presence/non-presence of the irradiation of each irradiation area is switched; and irradiates a corresponding irradiation area after a predetermined lighting delay time passes, when the irradiation areas of the high beam light distribution pattern are allowed to be widened based on the information that shows the circumstances in front of a subject vehicle.

Furthermore, the vehicle lamp system 100 includes the vehicle lamp 70 that can form a plurality of kinds of high beam light distribution patterns and low beam light distribution patterns, and the lamp controller 40 or controller 50 that controls the vehicle lamp 70. When the lamp controller 40 or the controller 50 should turn on a turned-off high beam light distribution pattern or a part thereof, the lamp controller 40 or the controller 50 turns on the turned-off high beam light distribution pattern or a part thereof after a predetermined delay time passes. Meanwhile, when the lamp controller 40 or the controller 50 should turn off a turned-on high beam light distribution pattern or a part thereof, the lamp controller 40 or the controller 50 may immediately turn off the turned-on high beam light distribution pattern or a part thereof.

Accordingly, since a high beam light distribution pattern or a part thereof is turned on after a predetermined lighting delay time passes, the frequent change of an irradiation area is suppressed without immediately following the change of the information that shows the circumstances in front of a subject vehicle. For this reason, the uncomfortable feeling of a driver is reduced. Meanwhile, since a turned-on high beam light distribution pattern or a part thereof is immediately turned off when the turned-on high beam light distribution pattern or the part thereof should be turned off, glare being directed at an object, which should not be irradiated, such as a forward vehicle or a pedestrian present in front of a vehicle is avoided.

## Claims

1. A lamp system (100) for a vehile, comprising:
a vehicle lamp (70) configured to selectively irradiate one of a plurality of high beam light distribution patterns (PH1, PH2, PH3,AH) toward a front area of the vehicle, wherein the front area is partitioned into a plurality of irradiation areas (A1, A2, A3) in a vehicle width direction;
a controller (100) configured to control the vehicle lamp so as to select one of the plurality of high beam light distribution patterns (PH1, PH2, PH3,AH) in response to position information of an object (C) in front of the vehicle,
wherein when the controller selects one of the high beam ligh distribution patterns so as to increase an irradiation area of the selected high beam light distribution pattern, the vehicle lamp irradiates the selected high beam light distribution pattern toward the front area of the vehicle after a certain lighting delay time has elapsed.

2. The system according to claim **1,**
wherein the plurality of high beam light distribution include:
a complete high beam light distribution pattern (AH) which is irradiated to all of the irradiation areas (A1, A2, A3); and
a partial high beam light distribution patterns (PH1, PH2, PH3) each of which is irradiated to a part of all of the irradiatation areas (A1, A2, A3) and each of which is formed by removing a part of the complete high beam light distribution pattern,
wherein if the object (C) is present in one of the irradiation areas (A1, A2, A3), the controller counts the lighting delay time, which corresponds to said one of the irradiation areas (A1, A2, A3), from zero again, and
wherein the lighting delay times, which correspond to the irradiation areas of the partial high beam light distribution patterns, are set to equal to or larger than the lighting delay time that corresponds to the irradiation area of the complete high beam light distribution pattern.

3. The system according to claim **2**, wherein
when the controller completely counts the lighting delay time corresponding to one of the irradiation areas of the partial high beam light distribution patterns while the object is not present in the other irradiation areas, the vehicle lamp defers the irradiation of the partial high beam light distribution pattern corresponding to the completely-counted lighting delay time, and
when the counter completely counts the lighting delay time corresponding to the irradiation area of the complete high beam light distribution pattern, the vehicle lamp starts the irradiation of the complete high beam light distribution pattern.

4. The system according to claim **2** or **3**, wherein
when the controller completely counts the lighting delay time corresponding to one of the irradiation areas of the partial high beam light distribution patterns,
if the object is approaching said one of the irradiation areas, the vehicle lamp defers the irradiation of the partial high beam light distribution pattern corresponding to the completely-counted lighting delay time, and
if the object is not approaching said one of the irradiation areas, the vehicle lamp starts the irradiation of the partial high beam light distribution pattern corresponding ot the completely-counted lighting delay time.

5. The system according to any one of claims **1** to **4**, wherein
when the controller completely counts the lighting delay time corresponding to one of the irradiation areas of the high beam light distribution patterns,
if the vehicle is traveling on a curved road, the vehicle lamp starts the irradiation of the high beam light distribution pattern corresponding to the completely-counted lighting delay time.

6. The system according to any one of claims **1** to **5**, wherein
when the controller completely counts the lighting delay time corresponding to one of the irradiation areas of the high beam light distribution patterns,
if a speed of the vehicle is decelerated to a control area that is higher than a control lower limit speed of the vehicle lamp by a predetermined value, the controller defers the irradiation of the high beam light distribution pattern corresponding to the completely-counted lighting delay time, and
if the speed of the vehicle is accelarted to an outside of the control area, the controller starts the irradiation of the high beam light distribution pattern corresponding to the completely-counted light delay time.

7. A controller (100) that controls a vehicle lamp that selectively irradiates one of a plurality of high beam light distribution patterns (PHI, PH2, PH3,AH) toward a front area of the vehicle, wherein the front area is partitioned into a plurality of irradiation areas (A1, A2, A3) in a vehicle width direction,
wherein the controller (100) is configured to control the vehicle lamp so as to select one of the plurality of high beam light distribution patterns (PHI, PH2, PH3,AH) in response to position information of an object (C) in front of the vehicle,
wherein when the controller selects one of the high beam ligh distribution patterns so as to increase an irradiation area of the selected high beam light distribution pattern, the vehicle lamp irradiates the selected high beam light distribution pattern toward the front area of the vehicle after a certain lighting delay time has elapsed.

8. A vehicle lamp (70) configured to selectively irradiate one of a plurality of high beam light distribution patterns (PHI, PH2, PH3, AH) toward a front area of the vehicle in response to position information of an object (C) in front of the vehicle, wherein the front area is partitioned into a plurality of irradiation areas (A1, A2, A3) in a vehicle width direction,
wherein when one of the plurality of high beam light distribution patterns (PH1, PH2, PH3,AH) are selected resulting in the increase in an irradiation area of the high beam light distribution pattern, the vehicle lamp irradiates the selected high beam light distribution pattern toward the front area of the vehicle after a certain lighting delay time has elapsed.

9. A vehicle lamp system comprising:
a vehicle lamp (70) configured to selectively irradiate one of a plurality of high beam light distribution patterns (PH1, PH2, PH3,AH) and a low beam light distribution pattern (Lo); and
a controller (100) that controls the vehicle lamp,
wherein the vehicle lamp (70) turns on one of the high beam light distribution patterns after a certain lighting delay time has elaplsed, while the vehicle lamp (70) turns off one of the high beam light distribution patterns immediately.
